# EUROPEAN PATENT SPECIFICATION

(11) **EP 3 812 122 B1**
(45) Date of publication and mention of the grant of the patent: **08.03.2023**
(21) Application number: 20202697.7
(22) Date of filing: 20.10.2020
(51) Int. Cl.: B29C 48/31, B29C 48/92, B29C 48/08, B29C 48/88

(54) **AUTOMATED MAPPING SYSTEM FOR CONTROLLING PARAMETERS OF POLYMERIC MELT**
AUTOMATISIERTES MAPPING-SYSTEM ZUR STEUERUNG VON PARAMETERN EINER POLYMEREN SCHMELZE
SYSTÈME AUTOMATISÉ DE MAPPAGE POUR CONTRÔLER DES PARAMÈTRES DE FUSION POLYMÈRE

(30) Priority: 21.10.2019 US 201962923868 P
(43) Date of publication of application: 28.04.2021
(73) Proprietor: Davis-Standard, LLC, Pawcatuck CT 06379 (US)
(72) Inventor: Moeller, Robert F., Baldwinsville, NY 13027 (US)
(74) Representative: AWA Denmark A/S

(56) References cited:
- EP-A1- 2 837 485
- JP-A- 2010 167 584

## Description

### FIELD OF THE INVENTION

The invention relates to a system for controlling parameters of polymeric film in a continuous melt forming apparatus as defined in the opening part of claim 1.

Thus, the present invention relates generally to a system for controlling parameters of polymeric melt and more particularly to a system for controlling the profile of polymeric melt discharged from a die using a haze generator (e.g., a haze formation device) to mark the molten polymeric film being discharged from the die, using the mark to map the profile of the polymeric film after quenching and adjusting the profile of the melt at the die based upon the map.

### BACKGROUND OF THE INVENTION

A system as defined in the opening part of claim 1 is e.g. known from EP2837485A1 and JP2010167584A.

Polymer film is manufactured by melting polymer pellets in an extruder apparatus and forcing melted polymer out of a gap (e.g., die slot, die lip) in the die that is in communication with the extruder apparatus. The size of the die gap is adjusted in increments across the transverse direction of the gap by a plurality of regulators. The polymer film can be manufactured via a cast film system that produces thin plastic sheets such as that used in stretch film; a cast sheet system that produces thick plastic film that can be cast into three-dimensional shapes such as cups; embossed cast film system for producing plastic sheets that have dimples, perforations or the like formed in them; and extrusion coating systems that bond polymer sheet to substrates such as paper. Dies that may be employed include slot dies and round dies (e.g., those used in blown film casting processes). The molten polymer film is discharged from the die in a machine direction which is the direction of travel of the polymer melt from the die.

Maintaining uniform thickness of the polymer film in a direction transverse to the machine direction is a difficult task. Edges of the film tend to neck-in, become narrower due to the tension created as the melt is pulled from the die in to quenching systems (e.g., cooling rollers). Thus, the thickness of the film can vary in the transverse direction, for example across the width of the die slot. Such varying of the thickness of the film in the direction transverse to the machine direction is often referred to as a series of non-linear lanes. After quenching of the melt into the film (i.e., solidified melt) the thickness of the film can be measured by a caliper or mass sensor and the die (e.g., multiple die slot gaps) is adjusted or controlled to obtain proper thickness profile (i.e., the variation in thickness transversely across the polymeric film) of the film after quenching of the polymeric melt.

However, the width of the film after quenching does not directly equate to the width of the molten film that is discharged from the die slot. Thus, a challenge in performing the adjustments and control of the thickness profile of the film is the inaccurate correlation of a caliper or mass sensor traversing across the solidified melt and corresponding a melt flow lane back to the die lip gap actuator used in controlling the profile in the measured lane.

Correlating the transverse position of the quenched film to the corresponding transverse position of the molten film discharged from the die slot is an iterative process. Measuring of the thickness of the film as a function of transverse position is typically done during initial set-up portions of each production run. The current processes for correlating the transverse position of the quenched film to the corresponding transverse position of the polymeric melt discharged from the die slot are time consuming, labor intensive, inaccurate, must be repeated each time the product is run in a product run, must be repeated for each new polymeric material or configuration used in a production run, presents significant safety hazards and results in significant waste of material.

Thus, there is a need for an automated system to control the profile of polymeric melt to address the foregoing problems.

### SUMMARY OF THE INVENTION

According to the present invention a system is provided as defined in claim 1.

The present invention includes a system for controlling parameters of polymeric film in a continuous melt forming process. The system includes an extruder that is configured to create a polymeric melt. The system includes a die (e.g., a slot-die) in communication with the extruder for receiving the polymeric melt from the extruder. The die has a gap (e.g., elongated opening between opposing die lips) extending transversely along a discharge end thereof. The system includes a plurality of regulators positioned transversely along the die proximate the gap for selectively regulating the gap about a nominal size setting of the gap. The system includes a cooling cylinder located downstream of the die in a machine direction. The polymeric melt extends from the die to the cooling cylinder and is wrapped around and cooled (e.g., quenched or solidified) thereon. The system includes one or more haze generators located proximate the gap and upstream of the cooling cylinder. The haze generators are configured to create haze lanes in the polymeric melt at respective origin points proximate the gap during production of the polymeric film. The system includes a haze sensor system that is located downstream from the gap in a measuring location of the haze lane where the polymeric melt has been quenched to form a polymeric film. The haze sensor system is configured to locate transverse points in the respective haze lane in the polymeric film at the measuring location. The haze sensor system is in communication with the plurality of regulators to adjust the gap about the nominal size setting based on a correlation of haze lane position at the respective origin points and the respective transverse points at the measuring location of the haze lane in the polymeric film.

In some embodiments, the haze generators include one or more ports configured to communicate a substance and/or a form of energy with the polymeric melt proximate the die to create the haze lane.

The haze generators are moveably positionable transversely across the die.

In some embodiments, the haze generators include a jet of air that impinges the polymeric melt to form the haze lane.

In some embodiments, the haze sensor system is configured to detect the haze lane and a transverse position of the haze lane.

In some embodiments, the system includes a control unit that has a computer processor which includes executable software that has an algorithm for controlling the adjusting of the gap based on a correlation of haze lane position of the polymeric melt at the origin points and the respective haze lane position of the polymeric film at the respective transverse points, at the measuring location.

In some embodiments, the computer processor is configured to store the correlation of haze lane position at the origin point and the haze lane position at the respective transverse points at the measuring location and have the executable software execute the correlation to have the control unit adjust the regulators for a plurality of initiations of product runs of the system for a plurality of polymeric material and configurations thereof.

In some embodiments, the die includes one or more width adjustment devices (e.g., one or more deckles) for adjusting a width of the polymeric melt being discharged from the gap.

In some embodiments, the haze generator is repositioned based upon a width adjustment caused by the width adjustment device.

The present invention includes a system for controlling parameters of polymeric melt in a continuous melt forming process. The system includes an extruder configured to create a polymeric melt. The system includes a die in communication with the extruder for receiving the polymeric melt from the extruder. The die has a gap extending transversely along a discharge end thereof and plurality of regulators transversely along the die proximate the gap for selectively regulating the gap about a nominal size setting of the gap. The system includes a cooling cylinder located downstream of the die in a machine direction. The polymeric melt extends from the die to the cooling cylinder which cools (e.g., quenches or solidifies) the polymeric melt. The system includes one of more thickness adjuster devices located proximate the gap. The thickness adjuster devices are configured to create a lane of changed thickness of the polymeric melt at an origin point proximate the gap during production of the polymeric film. The system includes a thickness sensor system located downstream from the gap in a measuring location of the lane of changed thickness of polymeric melt where the polymeric melt has been quenched to form a polymeric film. The thickness sensor is configured to locate the lane of changed thickness of the polymeric film. The thickness sensor system is in communication with the plurality of regulators to adjust the gap based on a correlation of the lane of changed thickness of the polymeric melt at the origin point and the location, in of the polymeric film, of the lane of changed thickness.

In some embodiments, the thickness adjuster devices include one or more pneumatic discharge ports configured to discharge a gas onto the polymeric melt proximate the die to create the lane of changed thickness of the polymeric melt.

### BRIEF DESCRIPTION OF THE DRAWINGS

FIG. 1 is a schematic view of the system for controlling parameters of polymeric melt in a continuous melt forming process of the present invention;
FIG. 2A is schematic side view of a substrate coating processing system using a modified version of the continuous melt forming process of FIG. 1;
FIG. 2B is a schematic top view of an extrusion die with a polymeric melt shown being extruded therefrom;
FIG. 2C is perspective schematic view of a portion of a haze generator;
FIG. 2D a schematic view of a traversing haze generator, according to the present invention;
FIG. 2E is an enlarged view of a portion of the die of FIG. 1;
FIG. 2F is a cross sectional schematic view taken across section 2F-2F of FIG. 2E;
FIG. 3 is a schematic view of the width adjustment system before conducting width adjustment;
FIG. 4 is a schematic view of the width adjustment system after conducting width adjustment; and
FIG. 5 is a schematic view of another embodiment, not claimed, of a system for controlling parameters of polymeric melt in a continuous melt forming process.

### DETAILED DESCRIPTION

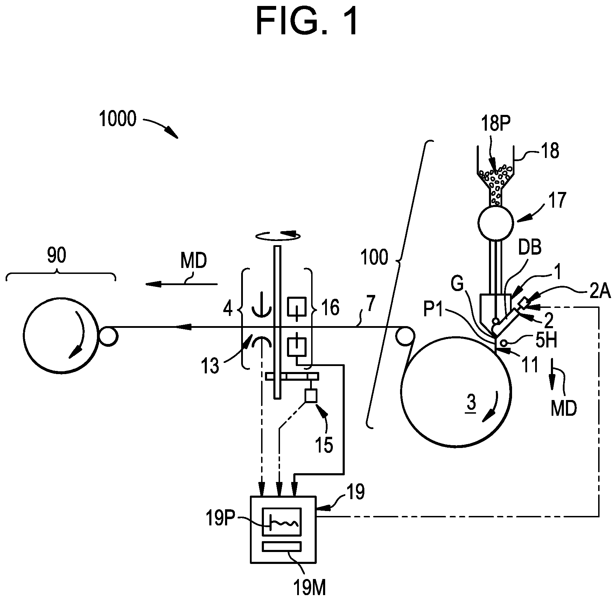

As shown in FIG. 1, a system 1000 is provided for controlling parameters of polymeric melt 11 in a continuous melt forming apparatus 100 that produces a polymeric film 7 from the polymeric melt 11. The continuous melt forming apparatus 100 includes a hopper 18 which receives, holds and discharges un-melted polymer pellets 18P therein. The continuous melt forming apparatus 100 includes an extruder 17 located downstream of and in communication with the hopper 18. The extruder 17 melts the polymeric pellets to create the polymeric melt 11. The continuous melt forming apparatus 100 includes a die 1 secured to a discharge end of the extruder 17. The extruder 17 delivers the polymeric melt 11 to the die 1 where the die 1 creates a profile to the polymeric melt 11 as it exits the die 1 via a gap G. The continuous melt forming apparatus 100 includes a cooling cylinder 3 located downstream from and spaced apart from the die 1. The die 1 discharges the polymeric melt 11 through the gap G in a machine direction MD onto the cooling cylinder 3 which cools the polymeric melt 11 thereby quenching and solidifying the polymeric melt 11 thereby forming the polymeric film 7. The polymeric melt 11 is pulled over and/or drawn out of the die 1 by rotation (e.g., clockwise rotation shown for example in FIG. 1) of the cooling cylinder 3 creating the polymeric film 7. The die 1 includes a plurality of regulators 2 attached thereto to control the size of the gap G, as described further herein.

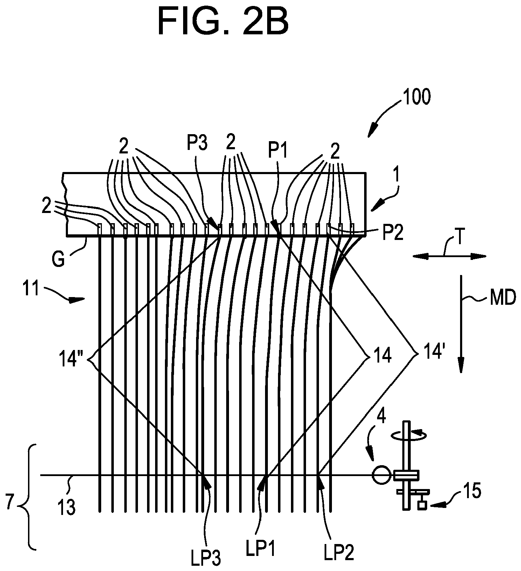

As shown in FIG. 1, the system 1000 includes one or more haze generators 5H (e.g., a device that creates an optical haze in the molten polymeric film) located proximate the gap G, as described in further detail herein. Each of the haze generators 5H is configured to create a haze lane 14, 14", 14" (see FIG. 2B) in the polymeric melt 11 at each of the respective origin points P1, P2, P3 thereon, proximate the gap G, during production of the polymeric melt 11. While three haze lanes are labeled in FIG. 2B for the respective origin points P1, P2 and P3, the present invention is not limited in this regard as the haze generator 5H is configured to create additional haze lanes at all other origin points corresponding to each regulator 2.

As shown in FIG. 1, the system 1000 includes a haze sensor system 4 located downstream from the gap G and downstream of the cooling cylinder 3 to locate the haze lanes 14, 14', 14" as described further herein with reference to FIG. 2B. The system 1000 includes a measuring device 16 (e.g., a caliper or mass sensor or profile sensor) located between the cooling cylinder 3 and the haze sensor system 4. The measuring device 16 is used to measure the thickness profile (i.e., the variation in thickness transversely across the polymeric film) of the polymeric film 7. The haze sensor system 4 includes a traversing mechanism that is configured to move transversely (i.e., laterally, perpendicular to the machine direction MD) across the polymeric film 7 to detect the transverse position LP1, LP2, and LP3 (see FIG. 2B) of the haze lane 14, 14' and 14", respectively (see FIG. 2B). The measuring device 16 includes a traversing mechanism that is configured to move transversely across the polymeric film 7 to detect the thickness of the polymeric film 7 at positions corresponding to the transverse position LP1, LP2 and LP3 (see FIG. 2B) of the haze lanes 14, 14' and 14", respectively (see FIG. 2B). While the haze sensor system 4 is described as detecting the transverse positions LP1, LP2, LP3 of the haze lanes 14, 14' and 14", respectively, the present invention is not limited in this regard as the haze sensor system is configured to measure a plurality of transverse positions of a plurality of corresponding haze lanes. The haze sensor system is configured to detect each transverse position (e.g., LP1, LP2, LP3) of the respective haze lane (e.g., 14, 14', 14") one at a time or together as a group or sub-group.

As shown in FIG. 1, the system 1000 includes an encoder 15 that is in communication with the haze sensor system 4 and the measuring device 16 and receives and processes signals therefrom. The system 1000 includes a control unit 19 (e.g., an Automatic Profile Control APC system) that includes a computer processor 19P having executable software 19M that generates an algorithm for calibrating, controlling and adjusting the size of the gap G based upon a correlation of the position of the haze lanes 14, 14', 14" of the polymeric film 7 at the transverse points LP1, LP2, LP3 at the measuring location 13 to the respective haze lane position 14, 14' 14" of the polymeric melt 11 at the respective origin points P1,P2, P3, acquired during an initial startup product run of the system 1000. The control unit 19 is in communication with the encoder 15, the haze sensor system 4 and the measuring device 16 and receives signals therefrom. The control unit 19 is in communication with each of the plurality of regulators 2. The control unit 19 transmits control signals to each of the plurality of regulators 2 for controlling and adjusting the size of the gap G. The computer processor 19P stores the algorithm generated from the correlation of the position of the haze lanes 14, 14', 14" of the polymeric film 7 at the transverse points LP1, LP2, LP3 at the measuring location 13 to the respective haze lane position 14, 14' 14" of the polymeric melt 11 at the respective origin points P1,P2, P3 and applies the algorithm to future product start up runs, without the need creating further haze lanes and correlating the locations thereof between the transverse points LP1, LP2, LP3 and the origin points P1, P2, P3 and the respective regulators associated therewith.

As shown in FIG. 1, the system includes a winding roll assembly 90 for receiving and rolling the polymeric film thereon.

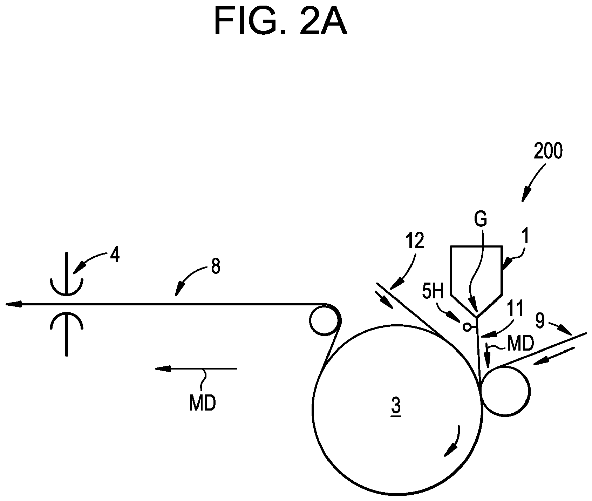

While FIG. 1 illustrates the continuous melt forming apparatus 100, the present invention may also be employed in a continuous melt forming apparatus 200 that is configured to form a laminated film 8 by laminating two substrates 9 and 12 together by feeding the polymer melt 11 between the two substrates 9 and 12 in a continuous process as shown in FIG. 2A. The polymeric melt 11 solidifies between and bonds the two substrates 9 and 12 together to form the laminated film 8 during cooling and quenching of the polymeric melt 11 on the cooling cylinder 3 during rotation of the cooling cylinder 3. The laminated film 8 discharged from the cylinder 3 has the polymeric film bonded to opposing surfaces of the two substrates 9 and 12. The melt forming apparatus 200 shown in FIG. 2A can replace the melt forming apparatus 100 shown in FIG. 1 and operate with the system 1000 in a manner similar to that described herein with respect to FIG. 1.

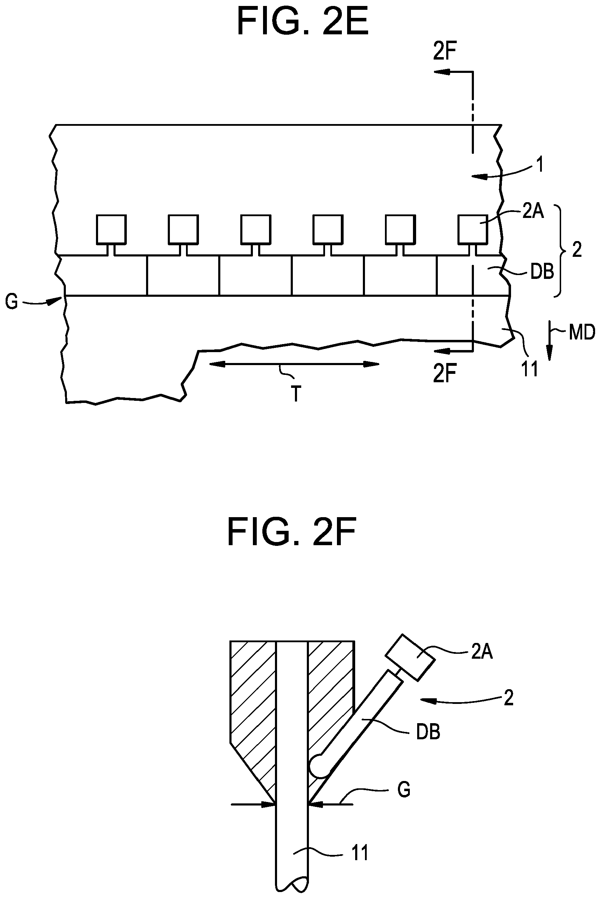

As shown in FIG. 2B, the die 1 extends transversely to the machine direction MD (i.e., perpendicular to the machine direction MD) as indicated by the arrow T. The die 1 has a plurality of regulators 2 (shown in FIG. 2B schematically as small rectangles and shown with additional detail in FIG. 2E) positioned transversely across the die 1. Each of the plurality of regulators 2 is configured for selectively regulating the size of the gap G at a plurality of positions transversely across the die 1. For example, the control unit 19 transmits control signals to the regulator 2 located proximate the origin point P1 (see FIG. 2B) to ensure the thickness of the polymeric film 7 at a respective transverse point LP1 (see FIG. 2B) for the haze lane 14 (see FIG. 2B) has a thickness that meets specification. The executable software 19M includes an algorithm for controlling the adjustment of the gap G at the origin point P1 (see FIG. 2B) based on a correlation of the thickness of the polymeric film 7 at the at the transverse point LP1 (see FIG. 2B) in the haze lane 14 (see FIG. 2B) detected by the haze sensor system 4 at the measuring location 13 where the polymeric melt 11 has been quenched into the polymeric film 7.

As shown in FIG. 1, the control unit 19 transmits control signals to the regulator 2 located proximate an origin point P2 (see FIG. 2B) to ensure the thickness of the polymeric film 7 at the respective transverse point LP2 (see FIG. 2B) for haze lane 14' (see FIG. 2B) has a thickness that meets specification. The executable software 19M includes an algorithm for controlling the adjustment of the gap G at the origin point P2 (see FIG. 2B) based on a correlation of the thickness of the polymeric film 7 at the at the transverse point LP2 (see FIG. 2B) in the haze lane 14' (see FIG. 2B) detected by the haze sensor system 4 at the measuring location 13 where the polymeric melt 11 has been quenched into the polymeric film 7.

As shown in FIG. 1, the control unit 19 transmits control signals to the regulator 2 located proximate an origin point P3 (see FIG. 2B) to ensure the thickness of the polymeric film 7 at the respective transverse point LP3 (see FIG. 2B) for haze lane 14" (see FIG. 2B) has a thickness that meets specification. The executable software 19M includes an algorithm for controlling the adjustment of the gap G at the origin point P3 (see FIG. 2B) based on a correlation of the thickness of the polymeric film 7 at the at the transverse point LP3 (see FIG. 2B) in the haze lane 14" (see FIG. 2B) detected by the haze sensor system 4 at the measuring location 13 where the polymeric melt 11 has been quenched into the polymeric film 7.

While the control unit 19 is shown and described as controlling the actuators 2 at the origin points P1, P2 and P3 based upon thickness of the polymeric film 7 in the haze lanes 14, 14' and 14" at transverse points LP1, LP2, and LP3, respectively, the present invention is not limited in this regard as the control unit 19 is configured to control each of the regulators 2 for each haze lane corresponding to the respective regulator 2 in a manner similar to that described herein for the haze lanes 14, 14' and 14".

During production of the polymeric melt 11, each of the haze generators 5H (shown in FIG. 1) is configured to create a haze lane 14, 14', 14" in the polymeric melt 11 at an origin point P1, P2, P3 as shown on FIG. 2B. The origin point P1, P2, P3 is located proximate the gap G. As shown in FIGS. 1 and 2B, the haze sensor system 4 is located downstream from the gap G at a measuring location 13 of the haze lane 14, 14', 14" where the polymeric melt 11 has been quenched into the polymeric film 7. The haze sensor system 4 is configured to detect the haze lane 14, 14', 14" and to capture a transverse position LP1, LP2, LP3 (see FIG. 2B) of the haze lane 14, 14', 14", respectively. The haze sensor system 4 is in communication with the plurality of regulators 2 to adjust the gap-sizes based on a correlation of haze lane position at the origin point P1, P2, P3 and the measuring location 13 of the haze lane 14, 14', 14" where the polymeric melt has been quenched. The haze generator 5H is configured to create a plurality of additional haze lanes, for example haze lanes 14' and 14", in the polymeric melt 11 a plurality of additional origin points, for example, origin points P2 and P3, respectively.

Thus, the haze sensor system 4 maps the transverse position (e.g., LP1, LP2, LP3) for the corresponding haze lane (e.g., 14, 14', 14") and the control unit 19 employs the executable software 19M to correlate (e.g., calibrate, assign or align) the transverse position (e.g., LP1, LP2, LP3) with the respective regulator 2 at the respective origin point (e.g., P1, P2, P3) to cause the respective regulator to adjust the gap G to adjust the thickness of the polymeric melt 11 at the respective origin point (e.g., P1, P2, P3). The regulators 2 are configured to modulate the magnitude of the gap G, for example, to locally increase the magnitude of the gap G at each respective origin point (e.g., P1, P2, P3) to increase the thickness of the polymeric melt 11 at each respective origin point (e.g., P1, P2, P3) and to locally decrease the magnitude of the gap G at each respective origin point (e.g., P1, P2, P3) to decrease the thickness of the polymeric melt 11 at each respective origin point (e.g., P1, P2, P3).

The computer processor 19P is configured to store the algorithm generated based on the correlation of haze lane position of the polymeric melt 11 at the respective origin points P1, P2, P3 and the haze lane position of the polymeric film 7 at the respective transverse points LP1, LP2, LP3 at the measuring location 13 and have the executable software 19M execute the correlation to have the control unit 19 adjust the regulators 2 for a plurality of startup of future product runs of the system 1000 for a plurality of polymeric material and configurations thereof. Thus, algorithms are established for each particular type of polymeric material, die 1 and desired polymeric film 7 characteristics and saved in the computer processor 19P for execution of future startup product runs without having to recalibrate the system 1000. The algorithm has utility in avoiding the material waste, safety hazards, lengthy and repetitive calibration times for each startup of product runs and other disadvantages of prior art systems.

The haze generator 5H is configured to create the haze lanes (e.g., 14, 14', 14") by use of one or more processes, including but not limited to communicating (e.g., discharging, touching, in close proximity to) a substance and/or a form of energy therefrom onto selective portions of the polymeric melt 11. For example, the haze generator 5H is configured to discharge one or more substances such as, but not limited to, a gas (e.g., air or nitrogen), a powder, a liquid, particles, mechanical devices (e.g., roller or brush), a color media, a polymer and combinations thereof onto or in close proximity to selective portions of the polymeric melt 11, for example proximate the origin points P1, P2, P3. For example, the haze generator 5H is configured to create or discharge forms of energy such as, but not limited to, heat sources, heat sinks, cooling media, a shock wave, a vibration, audible sound waves, an ultrasonic transmission and radiation onto or in close proximity to the selective portions of the polymeric melt 11, for example proximate the origin points P1, P2, P3.

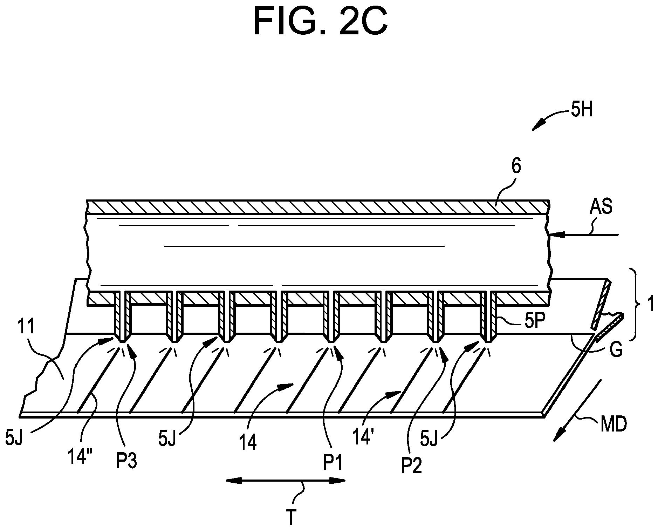

For example, as shown in FIG. 2C, each of the haze generators 5H has one or more (e.g., a plurality of discharge ports) discharge ports 5P configured to discharge a gas (e.g., air) onto the polymeric melt 11 proximate the die 1 to create the haze lane 14. Each of the discharge ports 5P are located at a predetermined position proximate the gap G and adjacent a respective one of the plurality of regulators 2 (see FIG. 2B). The haze generator 5H includes a gas distribution manifold 6 that is in communication with each of the pneumatic discharge ports 5P, for supplying a gas (e.g., air) to the discharge ports 5P from a suitable supply source AS. Each of the discharge ports 5P of the haze generator 5H creates a jet of gas 5J (e.g., air) that impinges the polymeric melt 11 to form the haze lane 14 at the origin point P1, to form the haze lane 14' at the origin point P2, to form the haze lane 14" at the origin point P3 and to form additional haze lanes at a plurality of additional origin points in the polymeric melt.

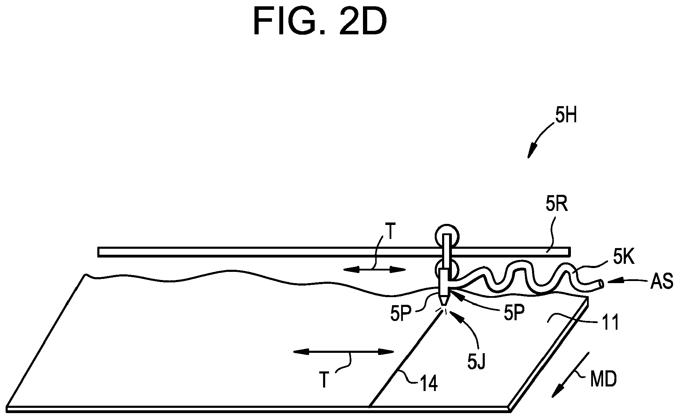

The haze generator 5H shown and described with reference to FIG. 2C employs the gas distribution manifold 6 and the plurality of discharge ports 5P. According to the present invention the haze generator 5H is moveably positionable transversely across the polymeric melt 11, as shown in FIG. 2D. For example, the haze generator 5H shown in FIG. 2D has one discharge port 5P riding on a rail arrangement 5R and has a flexible air supply tube 5K in communication with the discharge port 5P for supplying a gas (e.g., air) thereto from a suitable supply source AS.

As shown in FIGS. 2E and 2F, the gap G is a generally linear opening in the die 1. The gap G is adjustable by the regulators 2 that have actuators 2A that control and move die bolts DB proximate the gap G of the die 1 to regulate the gap G around a nominal opening to produce a profile in the polymeric film 7 (i.e., solidified melt) against a target base line profile at the point of measurement of the solidified melt being a film or coating on a web. The profile is typically flat, but in some embodiments the profile is shaped. In one embodiment, the material is a polymer having a suitable melt flow, viscosity and composition for making film.

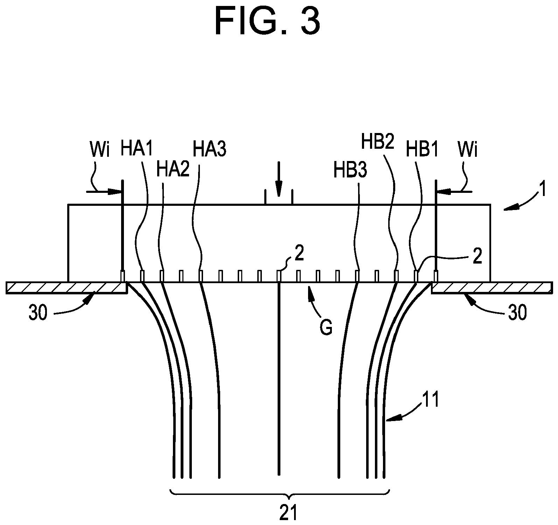

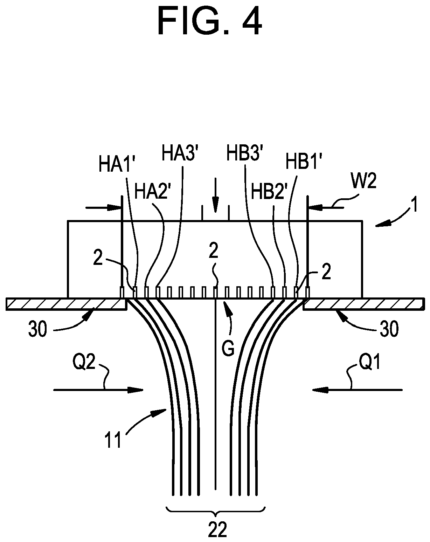

As shown in FIGS. 3 and 4, the die 1 includes width adjustment devices 30 (e.g., deckles) for adjusting a width of the polymeric melt 1 1 being discharged from the gap G. In one embodiment, the haze generator 5H (see FIG. 2D) is repositioned based upon a width adjustment caused by the width adjustment device 30. FIG. 3 illustrates the position of the width adjustment devices 30 at opposing transverse edges of the die 1. The width adjustment devices 30 shown in FIG. 3 are in an initial position (e.g., un-deckled die) thereby establishing an initial width Wi of the gap G of the die 1 and the polymeric melt 11 having a full width 21. A group of haze generators 5H (see FIG. 2D) are pre-set on opposing ends of the die 1 at positions HA1, HA2, HA3, HB1, HB2 and HB3.

As shown in FIG. 4, the width adjustment devices 30 are moved toward each other in the direction of the arrows Q1 and Q2, to shorten an effective width W2 of the gap G of the die 1 to produce a narrower width profile 22. As the width adjustment devices 30 are moved to shorten the width W2 of the gap G of the die 1, the group of haze generators 5H (see FIG. 2D) move in unison with the width adjustment devices 30. Thus, the group of haze generators 5H move from the positions HA1, HA2, HA3, HB1, HB2 and HB3 shown in FIG. 3 to the positions HA1', HA2', HA3', HB1', HB2' and HB3' shown in FIG. 4.

The physical movement of the width adjustment devices 30 and positions of the group of haze generators 5H is performed manually by a machine operator; or by the automated system via the computer processor 19P to a pre-set positions established by the algorithms employed by executable software 19M.

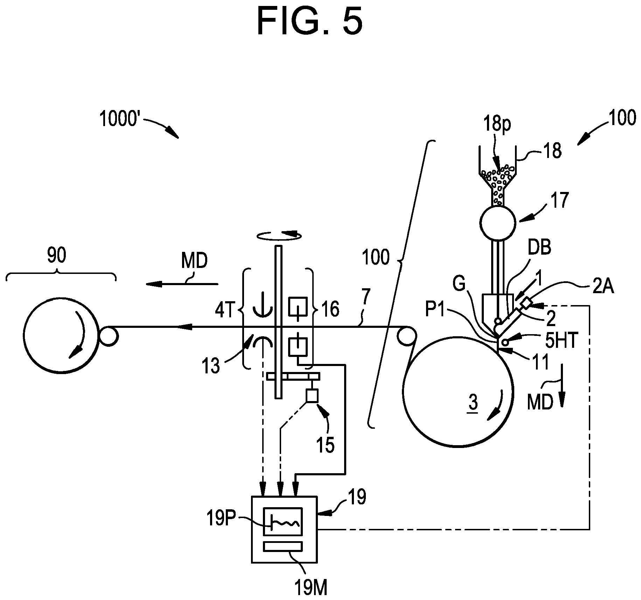

As shown in FIG. 5, an alternate embodiment, which is not claimed but can be useful for understanding the present invention, this embodiment being suitable for controlling parameters of polymeric melt 11 in a continuous melt forming apparatus 100 that produces a polymeric film 7 from the polymeric melt 11 is designated by the numeral 1000'. The system 1000' is similar to the system 1000, thus the same element numbers are employed except where differences in the system 1000' are present. For example, the system 1000' selectively regulates the size of the gap G of the die 1 at a plurality of positions transversely across the die 1 based on the thickness of the polymeric melt 11. In this embodiment, at least one film thickness adjuster 5HT is located proximate to the gap G and the thickness adjuster 5HT creates a lane of changed thickness of the polymeric melt 11 at an origin point P1 proximate to the gap G, during production of the polymeric melt 11. A thickness sensor system 4T is located downstream from the gap G, at a measuring location 13 where the polymeric melt 11 has been quenched into the polymeric film 7. The thickness sensor system 4T communicates with the regulators 2 to adjust the size of the gap G based on a correlation of the measuring location of the lane of changed thickness of the polymeric melt 11 at the origin point P1 and the measuring location 13 of the lane of changed thickness where the polymeric melt has been quenched into the polymeric film 7.

In some embodiments, the thickness adjuster 5HT has at least one discharge port (e.g., discharge ports similar to the discharge ports 5P shown in FIGS. 2C and 2D for the system 1000) that is configured to discharge a gas onto the polymeric melt 11 proximate the die 1 to create a lane of changed thickness of the polymeric melt 11.

In some embodiments, a system 1000 is combined with the system 1000' and includes at least one haze generator 5H and at least one film thickness adjuster 5HT. The systems 1000 and 1000' adjust the size of the gap G at a plurality of positions across the die 1 based on the measuring location 13 of the haze lane 14 and/or the lane of changed thickness of the film.

The system 1000 and 1000' have utility in a continuous "melt forming process", whereby an extruder is used to create a molten polymer and pumps the molten polymer or "melt" (polymeric melt 11) into a slot type die where by regulators on the die (e.g., die lips of the die) shape the polymeric melt 11 into a profile (e.g., flat profile). In the process of shaping the profile a traversing sensor measures the formed profile of the polymeric film 7 and correlates the transverse points LP1, LP2, LP3 at the measuring location 13 to a respective regulator 2 on the die 1.

The invention includes a method to automatically calibrate, or "map" a series of "non-linear" flowing narrow width "lanes" created in the polymeric melt 11 at the gap G of the die 1 and with respect to locations of the regulators 2 on the die 1. The method includes locating the lanes on the polymeric film 7 with a traversing measuring device (e.g., haze sensor 4 or thickness sensor) with transverse position feedback located at a position in the material flowing direction (i.e., machine direction MD) after the point of quenching to automatically control thickness of the polymeric film 7 via the control unit 19.

Although the present invention has been disclosed and described with reference to certain embodiments thereof, it should be noted that other variations and modifications may be made, and it is intended that the following claims cover the variations and modifications within the true scope of the invention.

## Claims

1. A system (1000) for controlling parameters of polymeric film (7) in a continuous melt forming apparatus (100, 200), the system (1000) comprising:
an extruder (17) configured to create a polymeric melt (11);
a die (1) in communication with the extruder (17) for receiving the polymeric melt (11) from the extruder (17), the die (1) having a gap (G) extending transversely along a discharge end thereof and plurality of regulators (2) positioned transversely along the die (1) proximate the gap (G) for selectively regulating the size of the gap (G);
a cooling cylinder (3) located downstream of the die (1) in a machine direction (MD), the polymeric melt (11) extending from the die (1) to the cooling cylinder (3);
at least one haze generator (5H) located proximate the gap (G) and upstream of the cooling cylinder (3), the at least one haze generator (5H) being configured to create at least one haze lane (14, 14', 14") in the polymeric melt (11) at a respective origin point (P1, P2, P3) proximate the gap (G) during production of the polymeric film (7);
a haze sensor system (4) being located downstream from the gap (G) in a measuring location (13) of the haze lane (14. 14', 14") where the polymeric melt (11) has been quenched to form the polymeric film (7), the haze sensor system (4) being configured to locate a transverse point (LP1, LP2, LP3) for the respective haze lane (14. 14', 14") in the polymeric film (7) at the measuring location (13); and
the haze sensor system (4) being in communication with the plurality of regulators (2) to adjust the size of the gap (G) based on a correlation of haze lane (14, 14', 14") position at the respective origin point (P1, P2, P3) and the respective transverse point (LP1, LP2, LP3) at the measuring location (13), **characterized in that** the at least one haze generator (5H) is moveably positionable transversely along the die (1).

2. The system (1000) of claim 1, wherein the at least one haze generator (5H) comprises at least one port (5P) configured to communicate at least one of a substance and a form of energy with the polymeric melt (11) proximate the die (1) to create the haze lane (14).

3. The system (1000) of claim 1, wherein the at least one haze generator (5H) comprises a jet of gas (5J) that impinges the polymeric melt to form the haze lane (14).

4. The system (1000) of claim 1, wherein the haze sensor system (4) is configured to detect the haze lane (14) and a transverse position (LP) of the haze lane (14).

5. The system (1000) of claim 1, further comprising a control unit (19) comprising a computer processor (19P) having executable software (19M) that has an algorithm for controlling the adjusting of the gap (G) based on a correlation of haze lane position at the origin points (P1, P2, P3) and the respective haze lane position at the respective transverse points (LP1, LP2, LP3), at the measuring location (13).

6. The system (1000) of claim 5, wherein the computer processor (19P) is configured to store the correlation of haze lane position of the polymeric melt (11) at the respective origin points (P1, P2, P3) and the haze lane position of the polymeric film (7) at the respective transverse points (LP1, LP2, LP3) at the measuring location (13) and have the executable software (19M) execute the correlation to have the control unit (19) adjust the regulators (2) for a plurality of initiations of product runs of the system (1000) for a plurality of polymeric material and configurations thereof.

7. The system (1000) of claim 1, wherein the die (1) comprises at least one width adjustment device (30) for adjusting a width of the polymeric melt (11) being discharged from the gap (G).

8. The system (1000) of claim 7, wherein the at least one width adjustment device (30) comprises a deckle.

9. The system (1000) of claim 7, wherein the least one haze generator (5H) is repositionable based upon a width adjustment caused by the width adjustment device (30).

10. The system of claim 1, further a comprising measuring device (16) located between the cooling cylinder (3) and the haze sensor system (4), the measuring device (16) being configured to measure a thickness profile transversely across the polymeric film.

11. The system of claim 10, wherein the measuring device (16) includes a traversing mechanism that is configured to move transversely across the polymeric film (7) to detect the thickness of the polymeric film (7) at positions corresponding to transverse positions (LP1, LP2 and LP3) of the haze lanes (14, 14' and 14").

12. The system of claim 1, wherein the at least one haze generator (5H) is configured to discharge a liquid onto the polymeric melt (11).

13. The system of claim 1, wherein the at least one haze generator (5H) is configured to discharge a polymer onto the polymeric melt (11).

## Patentansprüche

1. System (1000) zur Steuerung von Parametern eines polymeren Films (7) in einem kontinuierlichen Schmelzebildungsgerät (100, 200), wobei das System (1000) umfasst:
einen Extruder (17), der ausgestaltet ist, um eine polymere Schmelze (11) zu erzeugen;
eine Düse (1) in Kommunikation mit dem Extruder (17) zum Empfangen der polymeren Schmelze (11) von dem Extruder (17), wobei die Düse (1) einen Spalt (G), der sich quer entlang einem Austragungsende davon erstreckt, und eine Vielzahl von Reglern (2) aufweist, die quer entlang der Düse (1) nahe dem Spalt (G) positioniert sind, um die Größe des Spalts (G) selektiv zu regeln;
einen Kühlzylinder (3), der sich nachgeordnet zu der Düse (1) in einer Maschinenrichtung (MD) befindet, wobei die polymere Schmelze (11) sich von der Düse (1) zu dem Kühlzylinder (3) erstreckt;
mindestens einen Trübungsgenerator (5H), der nahe dem Spalt (G) und vorgeordnet zu dem Kühlzylinder (3) angeordnet ist, wobei der mindestens eine Trübungsgenerator (5H) ausgestaltet ist, um während der Produktion des polymeren Films (7) mindestens eine Trübungsspur (14, 14', 14") in der polymeren Schmelze (11) an einem jeweiligen Ursprungspunkt (P1, P2, P3) nahe dem Spalt (G) zu erzeugen;
ein Trübungssensorsystem (4), das nachgeordnet zu dem Spalt (G) in einer Messstelle (13) der Trübungsspur (14, 14', 14") angeordnet ist, wo die polymere Schmelze (11) gequencht worden ist, um den polymeren Film (7) zu bilden, wobei das Trübungssensorsystem (4) ausgestaltet ist, um einen Querpunkt (LP1, LP2, LP3) für die jeweilige Trübungsspur (14, 14', 14") in dem polymeren Film (7) an der Messstelle (13) zu lokalisieren; und
das Trübungssensorsystem (4) sich in Kommunikation mit der Vielzahl der Regler (2) befindet, um die Größe des Spalts (G) basierend auf einer Korrelation der Position der Trübungsspur (14, 14', 14") an dem jeweiligen Ursprungspunkt (P1, P2, P3) und dem jeweiligen Querpunkt (LP1, LP2, LP3) an der Messstelle (13) anzupassen, **dadurch gekennzeichnet, dass** der mindestens eine Trübungsgenerator (5H) beweglich quer entlang der Düse (1) positionierbar ist.

2. System (1000) nach Anspruch 1, wobei der mindestens eine Trübungsgenerator (5H) mindestens einen Port (5P) umfasst, der ausgestaltet ist, um mindestens eines von einer Substanz und einer Energieform an die polymere Schmelze (11) nahe der Düse (1) zu kommunizieren, um die Trübungsspur (14) zu erzeugen.

3. System (1000) nach Anspruch 1, wobei der mindestens eine Trübungsgenerator (5H) einen Gasstrahl (5J) umfasst, der auf die polymere Schmelze auftrifft, um die Trübungsspur (14) zu bilden.

4. System (1000) nach Anspruch 1, wobei das Trübungssensorsystem (4) ausgestaltet ist, um die Trübungsspur (14) und eine Querposition (LP) der Trübungsspur (14) zu detektieren.

5. System (1000) nach Anspruch 1, des Weiteren umfassend eine Steuereinheit (19), die einen Computerprozessor (19P) mit ausführbarer Software (19M) umfasst, die einen Algorithmus zur Steuerung der Anpassung des Spalts (G) basierend auf einer Korrelation der Trübungsspurposition an den Ursprungspunkten (P1, P2, P3) und der jeweiligen Trübungsspurposition an den jeweiligen Querpunkten (LP1, LP2, LP3) an der Messstelle (13) aufweist.

6. System (1000) nach Anspruch 5, wobei der Computerprozessor (19P) ausgestaltet ist, um die Korrelation der Trübungsspurposition der polymeren Schmelze (11) an den jeweiligen Ursprungspunkten (P1, P2, P3) und der Trübungsspurposition des polymeren Films (7) an den jeweiligen Querpunkten (LP1, LP2, LP3) an der Messstelle (13) zu speichern, und so, dass die ausführbare Software (19M) die Korrelation ausführt, damit die Steuereinheit (19) die Regler (2) für eine Vielzahl von Initiierungen von Produktläufen des Systems (1000) für eine Vielzahl von polymerem Material und dessen Konfigurationen anpasst.

7. System (1000) nach Anspruch 1, wobei die Düse (1) mindestens eine Breitenanpassungsvorrichtung (30) zum Anpassen einer Breite der polymeren Schmelze (11) umfasst, die aus dem Spalt (G) ausgetragen wird.

8. System (1000) nach Anspruch 7, wobei die mindestens eine Breitenanpassungsvorrichtung (30) eine Randbegrenzung umfasst.

9. System (1000) nach Anspruch 7, wobei der mindestens eine Trübungsgenerator (5H) basierend auf einer Breitenanpassung, die durch die Breitenanpassungsvorrichtung (30) bewirkt wird, repositionierbar ist.

10. System nach Anspruch 1, des Weiteren umfassend eine Messvorrichtung (16), die zwischen dem Kühlzylinder (3) und dem Trübungssensorsystem (4) angeordnet ist, wobei die Messvorrichtung (16) ausgestaltet ist, um ein Dickenprofil quer über den polymeren Film zu messen.

11. System nach Anspruch 10, wobei die Messvorrichtung (16) einen Verfahrmechanismus einschließt, der ausgestaltet ist, um sich quer über den polymeren Film (7) zu bewegen, um die Dicke des polymeren Films (7) an Positionen entsprechend Querpositionen (LP1, LP2 und LP3) der Trübungsspuren (14, 14' und 14") zu detektieren.

12. System nach Anspruch 1, wobei der mindestens eine Trübungsgenerator (5H) ausgestaltet ist, um eine Flüssigkeit auf die polymere Schmelze (11) auszutragen.

13. System nach Anspruch 1, wobei der mindestens eine Trübungsgenerator (5H) ausgestaltet ist, um ein Polymer auf die polymere Schmelze (11) auszutragen.

## Revendications

1. Système (1000) destiné à contrôler des paramètres d'un film polymère (7) dans un appareil de formation de masse fondue continue (100, 200), le système (1000) comprenant :
une extrudeuse (17) configurée pour créer une masse fondue polymère (11) ;
une filière (1) en communication avec l'extrudeuse (17) pour recevoir la masse fondue polymère (11) provenant de l'extrudeuse (17), la filière (1) ayant une embouchure (G) s'étendant transversalement le long d'une extrémité de décharge de celle-ci et une pluralité de régulateurs (2) positionnés transversalement le long de la filière (1) à proximité de l'embouchure (G) pour réguler sélectivement la taille de l'embouchure (G) ;
un cylindre de refroidissement (3) situé en aval de la filière (1) dans une direction machine (MD), la masse fondue polymère (11) s'étendant depuis la filière (1) jusqu'au cylindre de refroidissement (3) ;
au moins un générateur de voile (5H) situé à proximité de l'embouchure (G) et en amont du cylindre de refroidissement (3), l'au moins un générateur de voile (5H) étant configuré pour créer au moins une ligne de voile (14, 14', 14") dans la masse fondue polymère (11) à un point d'origine respectif (P1, P2, P3) à proximité de l'embouchure (G) pendant la production du film polymère (7) ;
un système de détection de voile (4) situé en aval de l'embouchure (G) à un emplacement de mesure (13) de la ligne de voile (14, 14', 14") où la masse fondue polymère (11) a été refroidie brusquement pour former le film polymère (7), le système de détection de voile (4) étant configuré pour localiser un point transversal (LP1, LP2, LP3) pour la ligne de voile respective (14, 14', 14") dans le film polymère (7) à l'emplacement de mesure (13) ; et
le système de détection de voile (4) étant en communication avec la pluralité de régulateurs (2) pour régler la taille de l'embouchure (G) sur la base d'une corrélation de la position de la ligne de voile (14, 14', 14") au point d'origine respectif (P1, P2, P3) et du point transversal respectif (LP1, LP2, LP3) à l'emplacement de mesure (13), **caractérisé en ce que** l'au moins un générateur de voile (5H) est positionnable de façon mobile transversalement le long de la filière (1).

2. Système (1000) de la revendication 1, dans lequel l'au moins un générateur de voile (5H) comprend au moins un orifice (5P) configuré pour communiquer une substance et/ou une forme d'énergie à la masse fondue polymère (11) à proximité de la filière (1) pour créer la ligne de voile (14).

3. Système (1000) de la revendication 1, dans lequel l'au moins un générateur de voile (5H) comprend un jet de gaz (5J) qui frappe la masse fondue polymère pour former la ligne de voile (14).

4. Système (1000) de la revendication 1, dans lequel le système de détection de voile (4) est configuré pour détecter la ligne de voile (14) et une position transversale (LP) de la ligne de voile (14).

5. Système (1000) de la revendication 1, comprenant en outre une unité de commande (19) comprenant un processeur informatique (19P) ayant un logiciel exécutable (19M) qui a un algorithme pour contrôler le réglage de l'embouchure (G) sur la base d'une corrélation de la position d'une ligne de voile aux points d'origine (P1, P2, P3) et de la position de la ligne de voile respective aux points transversaux respectifs (LP1, LP2, LP3), à l'emplacement de mesure (13).

6. Système (1000) de la revendication 5, dans lequel le processeur informatique (19P) est configuré pour mémoriser la corrélation de la position d'une ligne de voile de la masse fondue polymère (11) aux points d'origine respectifs (P1, P2, P3) et de la position de la ligne de voile du film polymère (7) aux points transversaux respectifs (LP1, LP2, LP3) à l'emplacement de mesure (13) et faire exécuter par le logiciel exécutable (19M) la corrélation pour conduire l'unité de commande (19) à régler les régulateurs (2) pour une pluralité d'initiations de campagnes de produits du système (1000) pour une pluralité de matériaux polymères et de configurations de ceux-ci.

7. Système (1000) de la revendication 1, dans lequel la filière (1) comprend au moins un dispositif de réglage de largeur (30) pour régler une largeur de la masse fondue polymère (11) en train d'être déchargée de l'embouchure (G) .

8. Système (1000) de la revendication 7, dans lequel l'au moins un dispositif de réglage de largeur (30) comprend une réglette.

9. Système (1000) de la revendication 7, dans lequel l'au moins un générateur de voile (5H) est repositionnable sur la base d'un réglage de largeur provoqué par le dispositif de réglage de largeur (30).

10. Système de la revendication 1, comprenant en outre un dispositif de mesure (16) situé entre le cylindre de refroidissement (3) et le système de détection de voile (4), le dispositif de mesure (16) étant configuré pour mesurer un profil d'épaisseur transversalement d'un bout à l'autre du film polymère.

11. Système de la revendication 10, dans lequel le dispositif de mesure (16) comporte un mécanisme de traversée qui est configuré pour se déplacer transversalement d'un bout à l'autre du film polymère (7) pour détecter l'épaisseur du film polymère (7) à des positions correspondant à des positions transversales (LP1, LP2 et LP3) des lignes de voile (14, 14' et 14").

12. Système de la revendication 1, dans lequel l'au moins un générateur de voile (5H) est configuré pour décharger un liquide sur la masse fondue polymère (11).

13. Système de la revendication 1, dans lequel l'au moins un générateur de voile (5H) est configuré pour décharger un polymère sur la masse fondue polymère (11).
